# EUROPÄISCHE PATENTANMELDUNG

(11) **EP 4 692 640 A1**
(43) Veröffentlichungstag der Anmeldung: **11.02.2026**
(21) Anmeldenummer: 25186503.6
(22) Anmeldetag: 01.07.2025
(51) Int. Cl.: F21V 8/00

(54) **LICHTLEITER FÜR EINE HINTERGRUNDBELEUCHTUNG, EINE HINTERGRUNDBELEUCHTUNG UND EIN ANZEIGEGERÄT**

(30) Priorität: 16.07.2024 DE 102024206656
(71) Anmelder: AUMOVIO Germany GmbH, 60488 Frankfurt am Main (DE)
(72) Erfinder: Dr. Junge, Christian, 30175 Hannover (DE)
(74) Vertreter: Aumovio Corporation

(57) **Zusammenfassung**

Die vorliegende Erfindung bezieht sich auf einen Lichtleiter (3) für eine Hintergrundbeleuchtungseinheit. Die Erfindung ist ferner auf eine Hintergrundbeleuchtungseinheit gerichtet, die einen solchen Lichtleiter (3) umfasst, und auf eine Anzeigevorrichtung, die eine solche Hintergrundbeleuchtungseinheit umfasst. Der Lichtleiter (3) weist auf mindestens einen Lichteinkopplungsabschnitt (30), wobei der mindestens eine Lichteinkopplungsabschnitt (30) eine Anordnung von Totalreflexionskollimatoren (300) aufweist, und einen Lichtleitabschnitt (32), wobei der Lichtleitabschnitt (32) eine reflektierende geneigte Endfläche (326) aufweist, und wobei der Lichtleitabschnitt (32) eine Oberseite (320) und eine Unterseite (321) aufweist, wobei der Lichtleitabschnitt (32) so konfiguriert ist, dass er das vom Lichteinkopplungsabschnitt (3) kommende Licht (L3) innerhalb des Lichtleitabschnitts (32) zur geneigten Endfläche (326) führt, und das von der geneigten Endfläche (326) reflektierte Licht (L_{g}) durch die Oberseite (320) auskoppelt.

## Beschreibung

Die vorliegende Erfindung bezieht sich auf einen Lichtleiter für eine Hintergrundbeleuchtungseinheit. Die Erfindung ist ferner auf eine Hintergrundbeleuchtungseinheit gerichtet, die einen solchen Lichtleiter aufweist, und auf eine Anzeigevorrichtung, die eine solche Hintergrundbeleuchtungseinheit aufweist.

In modernen Kraftfahrzeugen werden dem Fahrer oder anderen Fahrzeuginsassen immer mehr Informationen zur Verfügung gestellt, die weit über die Anzeige des Fahrzeugzustands hinausgehen. Herkömmliche Kombiinstrumente werden daher zunehmend durch freiprogrammierbare, digitale Anzeigen ersetzt. Solche Anzeigen verwenden häufig eine transmissive Anzeigetafel, z. B. ein Flüssigkristall-Anzeigetafel, in Kombination mit einer Hintergrundbeleuchtungseinheit.

Hintergrundbeleuchtungseinheiten basieren heutzutage meist auf kantenbeleuchteten Lichtleitern, in die das Licht mehrerer Leuchtdioden (LED) über eine Seitenfläche des Lichtleiters eingekoppelt wird. Das Licht breitet sich im Lichtleiter durch Totalreflexion aus und wird durch spezielle Auskopplungsstrukturen an der Oberfläche des Lichtleiters oder durch eine spezielle Wahl der Lichtleitergeometrie, wie z.B. einen konischen Lichtleiter, wieder ausgekoppelt. Um Effizienz, Homogenität und Winkelemissionseigenschaften des ausgekoppelten Lichts zu modifizieren und zu verbessern, werden häufig zusätzliche Komponenten wie Diffusorfolien, Prismenfolien, Polarisationsfolien oder spezielle Beschichtungen verwendet.

US 11,048,037 B2 offenbart eine Hintergrundbeleuchtung und ein Multiview-Display, die einen Lichtleiter mit einer winkelerhaltenden Streufunktion und einem konischen Kollimator verwenden. Die winkelerhaltende Streufunktion ist so konfiguriert, dass ein Teil des geführten Lichts als emittiertes Licht aus dem Lichtleiter gestreut wird. Der konische Kollimator ist so konfiguriert, dass er das von einer Lichtquelle bereitgestellte Licht als kollimiertes Licht kollimiert und das kollimierte Licht als geführtes Licht an den Lichtleiter weiterleitet.

US 2007/0081360 A1 offenbart eine Display-Hintergrundbeleuchtungsanordnung, die eine verbesserte optische Kopplung zwischen einer Festkörper-Lichtquelle und einem optischen Display-Lichtleiter bietet. Die Baugruppe enthält einen optischen Koppler zum Koppeln der Festkörperlichtquelle und des optischen Lichtleiters des Displays. Zusätzlich kann der optische Koppler ein Lichtmischelement zur verbesserten Mischung des mehrfarbigen oder monochromatischen Lichts enthalten, das von der Festkörperlichtquelle erzeugt wird.

US 2017/0285242 A1 offenbart eine Flüssigkristallanzeigevorrichtung, die eine Lichtquelle umfasst, die Licht mit einer vorgegebenen Farbe emittiert, eine Linse, die das von der Lichtquelle emittierte Licht bündelt und bewirkt, dass das Licht austritt, einen Bandpassfilter, der Licht in einem bestimmten Wellenlängenband in dem aus der Linse austretenden Licht durchlässt, und eine Lichtleiterplatte, die auf einer Rückseite einer Anzeigetafel angeordnet ist. Das durch den Bandpassfilter durchgelassene Licht fällt auf eine seitliche Oberfläche der Lichtleiterplatte ein.

Die typische Abstrahlcharakteristik eines kantenbeleuchteten Hintergrundbeleuchtungssystems hat eine breite Winkelverteilung. Während diese Eigenschaft für viele Anwendungen von Vorteil ist, bei denen das Display aus einem weiten Winkelbereich ablesbar sein muss, sollte in einigen Anwendungen das von einem Display emittierte Licht auf einen kleinen Winkelbereich begrenzt werden. Head-up-Displays oder schaltbare Sichtschutzdisplays erfordern beispielsweise eine sehr schmale und gut definierte Winkelabstrahlung. Diese enge Verteilung kann mit aktuellen kantenbeleuchteten Lichtleitern, sogenannten Edge-Light-Konfigurationen, nicht erreicht werden. Alternativ können direktbeleuchtete Systeme verwendet werden, die das Display mit einer Reihe von Lichtquellen und einigen Kollimationsoptiken beleuchten. Diese Konfiguration ermöglicht es, enge Lichtverteilungen zu erreichen. Um eine akzeptable Homogenität zu erreichen, ist der Platzbedarf für das Beleuchtungssystem im Vergleich zu kantenbeleuchteten Systemen jedoch deutlich größer.

Es ist eine Aufgabe der vorliegenden Erfindung, eine kompakte kantenbeleuchtete Hintergrundbeleuchtungseinheit für eine Anzeigevorrichtung mit einer engen Winkellichtverteilung, einem hohen Wirkungsgrad und einer homogenen Beleuchtung bereitzustellen.

Diese Aufgabe wird durch einen Lichtleiter nach Anspruch 1, durch eine Hintergrundbeleuchtungseinheit nach Anspruch 13 und durch eine Anzeigevorrichtung nach Anspruch 14 gelöst. Die abhängigen Ansprüche beinhalten vorteilhafte Weiterentwicklungen und Verbesserungen der vorliegenden Grundsätze, wie im Folgenden beschrieben.

Nach einem ersten Aspekt weist ein Lichtleiter für eine Hintergrundbeleuchtungseinheit auf:
- mindestens einen Lichteinkopplungsabschnitt, wobei der mindestens eine Lichteinkopplungsabschnitt eine Anordnung von Totalreflexionskollimatoren aufweist, und
- einen Lichtleitabschnitt, wobei der Lichtleitabschnitt eine reflektierende geneigte Endfläche aufweist, und wobei der Lichtleitabschnitt eine Oberseite und eine Unterseite aufweist, wobei der Lichtleitabschnitt so konfiguriert ist, dass er das vom Lichteinkopplungsabschnitt kommende Licht innerhalb des Lichtleitabschnitts zur geneigten Endfläche führt, und das von der geneigten Endfläche reflektierte Licht durch die Oberseite auskoppelt.

Um mit einem kantenbeleuchteten Lichtleiter eine enge Lichtverteilung zu erzeugen, ist es notwendig, die Winkelverteilung des Lichts, das sich im Lichtleiter ausbreitet, genau zu steuern. Dazu wird das Licht während der Einkopplung kollimiert. Erfindungsgemäß wird ein Feld von Totalreflexionskollimatoren (TIR) verwendet. Im einfachsten Fall werden mehrere Totalreflexionskollimatoren in einer Linie nebeneinander, also eindimensional angeordnet. Aber auch eine zweidimensionale, flächige Anordnung liegt im Rahmen der Erfindung. Totalreflexionskollimatoren sind besonders vorteilhaft, da sie in der Lage sind, das von Leuchtdioden emittierte Licht mit hoher Effizienz zu sammeln und das gesammelte Licht auf einen kleinen Winkelbereich zu beschränken.

Erfindungsgemäß durchläuft das kollimierte Licht den Lichtleitabschnitt zunächst komplett, bevor es an der geneigten Endfläche reflektiert wird. Durch den langen Lichtweg findet eine ausreichende Durchmischung des Lichts unterschiedlicher Lichtquellen statt. Bei der Reflexion an der geneigten Endfläche wird dann außerdem der Propagationswinkel im Lichtleitabschnitt so geändert, dass das Licht zwar noch durch Totalreflexion geführt wird, aber gleichzeitig mit deutlich steilerem Winkel auf die Oberseite beziehungsweise die Unterseite trifft. Erfindungsgemäß ist die geneigte Endfläche des Lichtleitabschnitts so ausgebildet, dass sie Licht reflektiert, das den Lichtleitabschnitt einmal durchlaufen hat und die Endfläche erreicht. Das Licht, das die Endfläche erreicht, wird reflektiert und läuft in geänderter Richtung, also nichtparallel zur Einfallsrichtung, durch den Lichtleitabschnitt zurück. Die Endfläche ist so ausgebildet, dass die Reflexion eine Änderung des Ausbreitungswinkels des reflektierten Lichts bewirkt. Vorteilhaft ist die Endfläche in Bezug auf die Ausbreitungsrichtung des Lichts, das innerhalb des Lichtführungsabschnitts geführt wird, geneigt. Auf diese Weise wird erst bei der Rückausbreitung Licht ausgekoppelt. Dazu sind beispielsweise geeignet ausgelegte Mikrostrukturen vorgesehen.

Vorteilhaft sind die Oberseite und die Unterseite des Lichtleitabschnitts zueinander parallele Flächen. Dies führt dazu, dass die nahezu parallelen Lichtstrahlen beim ersten Durchlaufen des Lichtleitabschnitts nahezu immer an Oberseite beziehungsweise Unterseite totalreflektiert werden.

Ebenfalls vorteilhaft ist es, dass Oberseite und Unterseite in Richtung der ersten Lichtpropagation von der Lichtquelle zur gegenüberliegenden geneigten Endfläche eine leichte Öffnung zueinander haben. Auch hier ist Totalreflexion an Oberseite beziehungsweise Unterseite sichergestellt.

Das Feld der Totalreflexionskollimatoren ist mit einem Lichtleitabschnitt verbunden. Für eine effiziente Auskopplung des Lichts weist der Lichtleitabschnitt eine geringe Dicke auf, um die Wechselwirkung des Lichts mit den Oberflächen des Lichtleitabschnitts zu erhöhen. Dieser erfindungsgemäße Aspekt ermöglicht somit das Erreichen enger Lichtverteilungen mit sehr hoher Effizienz und guter Lichtmischung. Der Lichtleiter kann beispielsweise durch Spritzgießen oder durch Kombinieren eines Lichtleitabschnitts aus Glas mit einem Lichteinkopplungsabschnitt hergestellt werden. Der Lichtleiter kann auch vollständig aus Glas bestehen.

In einer vorteilhaften Ausführungsform weist die Unterseite des Lichtleitabschnitts Auskoppelstrukturen auf, wobei die Auskoppelstrukturen Bereiche aufweisen, die relativ zur Unterseite des Lichtleitabschnitts geneigt sind und so konfiguriert sind, dass sie einen Teil des innerhalb des Lichtleitabschnitts geführten Lichts auf die Oberseite des Lichtleitabschnitts lenken. Durch eine geeignete Wahl der Geometrie der Auskoppelstrukturen im Lichtleitabschnitt wird nur ein Bruchteil der verbreiterten Winkelverteilung im Lichtleitabschnitt ausgekoppelt. Dadurch ist die resultierende Winkelverteilung des Lichts an einer Anzeigetafel, welche mit dem Lichtleiter beleuchtet wird, noch sehr eng.

In einer vorteilhaften Ausführungsform sind eine Länge und eine Verjüngung der sich verjüngenden Lichtmischstrecke sowie die Neigung der Endfläche so ausgebildet, dass in Verbindung mit den Auskoppelstrukturen das aus der Lichtleitstrecke ausgekoppelte Licht eine enge Winkelverteilung aufweist. Durch die richtige Auslegung des konischen Lichtmischabschnitts, der Neigung der Endfläche und der Auskoppelstrukturen kann die Winkelverteilung des Lichts sehr kontrolliert verändert werden.

In einer vorteilhaften Ausführungsform ist eine Dichte der Auskoppelstrukturen entlang einer Ausbreitungsrichtung des innerhalb des Lichtleitabschnitts geleiteten Lichts so ausgebildet, dass das aus dem Lichtleitabschnitt heraus ausgekoppelte Licht eine im Wesentlichen konstante Helligkeitsverteilung über die gesamte Länge des Lichtleitabschnitts aufweist. Durch die Erhöhung der Dichte der Auskoppelstrukturen entlang der Ausbreitungsrichtung im Lichtleiter kann eine im Wesentlichen konstante Helligkeitsverteilung erreicht werden. Die erhöhte Dichte der Auskoppelstrukturen kompensiert die Verringerung der verfügbaren Lichtmenge entlang der Ausbreitungsrichtung.

In einer vorteilhaften Ausführungsform weist der Lichtleiter ferner eine Diffusorfolie auf, die auf oder über der Oberseite des Lichtleitabschnitts angeordnet ist. Eine solche Diffusorfolie kann beispielsweise verwendet werden, um die Homogenität weiter zu verbessern und die Winkelverteilung des Lichts zu modifizieren.

In einer vorteilhaften Ausführungsform weist der Lichtleiter weiterhin eine reflektierende Beschichtung auf, die auf der Unterseite des Lichtleitabschnitts angeordnet ist. Auf diese Weise werden Lichtverluste durch die Unterseite stark reduziert, was die Effizienz des Systems erhöht.

In einer vorteilhaften Ausführungsform weist der Lichtleiter ferner einen reflektierenden Polarisator auf, der auf oder über der Oberseite des Lichtleitabschnitts angeordnet ist. Die Ausführung ohne konischen Lichtleitabschnitt, d.h. die Ausführung, bei der Ober- und Unterseite des Lichtleitabschnitts parallel zueinander angeordnet sind, ermöglicht die Umsetzung des sogenannten Polarisationsrecyclings. Der reflektierende Polarisator auf oder über dem Lichtleitabschnitt reflektiert Licht mit einem Polarisationszustand, der sonst von der Anzeigetafel oder einem anderen, auf den Lichtleiter folgenden Bauteil, absorbiert würde, welches mittels des Lichtleiters beleuchtet wird. Mit Hilfe einer Verzögerungsschicht oder mittels Doppelbrechung kann der Polarisationszustand des reflektierten Lichts auf einer Retroreflexion an der Unterseite des Lichtleitabschnitts in den nutzbaren Polarisationszustand überführt werden. Zu diesem Zweck weist der Lichtleiter vorteilhafterweise weiterhin eine Verzögerungsschicht auf, die zwischen der Oberseite des Lichtleitabschnitts und dem reflektierenden Polarisator angeordnet ist. Alternativ kann der Lichtleitabschnitt aus einem doppelbrechenden Material bestehen. Mit beiden Ansätzen wird die Effizienz des Systems erhöht.

In einer vorteilhaften Ausführungsform weisen die Auskoppelstrukturen Bereiche auf, die parallel zur Unterseite des Lichtleitabschnitts verlaufen. Auf diese Weise maximieren die Auskopplungsstrukturen die Reflexion und bewahren die Richtung des recycelten Lichts.

In einer vorteilhaften Ausführungsform sind Lichteinkopplungsabschnitte und konische Lichtmischstrecken an zwei zueinander benachbarten, üblicherweise rechtwinklig zueinander angeordneten Seiten des Lichtleitabschnitts angeordnet. Diese Lösung hat den Vorteil, dass Licht von zwei verschiedenen Seiten in den Lichtleiterabschnitt eingekoppelt werden kann, was die Homogenität des Lichts, das aus dem Lichtleitabschnitt ausgekoppelt wird, weiter verbessert.

Vorteilhafterweise wird ein erfindungsgemäßer Lichtleiter in einer Hintergrundbeleuchtungseinheit für eine Anzeigevorrichtung verwendet. Die Hintergrundbeleuchtungseinheit weist weiterhin mindestens eine Anordnung von Lichtquellen auf, die so konfiguriert sind, dass sie Licht in Richtung der Totalreflexionskollimatoren des Lichtleiters emittieren.

Vorteilhafterweise wird eine erfindungsgemäße Hintergrundbeleuchtungseinheit in einer Anzeigevorrichtung, z. B. einer Anzeigevorrichtung für Automobilanwendungen, verwendet. Beispielsweise kann die Anzeigevorrichtung in einem Head-Up-Display verwendet werden oder so konfiguriert sein, dass sie eine umschaltbare Datenschutzfunktionalität bereitstellt. Natürlich ist die Verwendung der Hintergrundbeleuchtungseinheit nicht auf diese Anwendungen beschränkt. Die beschriebenen Lösungen eignen sich für alle Arten von Anwendungen, die homogene planare Beleuchtungseinheiten mit steuerbarem Winkelabstrahlverhalten erfordern.

In einer Ausführungsform umfasst die Anzeigevorrichtung ferner eine Prismenfolie, die so konfiguriert ist, dass sie eine Richtung des Beleuchtungslichts ändert, das von der Hintergrundbeleuchtungseinheit ausgeht. Dies ist besonders nützlich, wenn die Blickrichtung nicht senkrecht zu einer Anzeigetafel des Anzeigegeräts verläuft, was der Fall sein kann, wenn die Anzeigetafel geneigt ist, um Sonnenreflexionen zu vermeiden. Die Prismenfolie kann Teil der Hintergrundbeleuchtungseinheit oder eine separate Komponente der Anzeigevorrichtung sein.

Weitere Merkmale der vorliegenden Erfindung werden aus der folgenden Beschreibung und den beigefügten Ansprüchen in Verbindung mit den Abbildungen ersichtlich.
- Fig.1: zeigt eine perspektivische Ansicht eines erfindungsgemäßen Lichtleiters;
- Fig.2: zeigt eine Seitenansicht des Lichtleiter von Fig.1;
- Fig.3: zeigt eine Frontansicht eines Lichteinkopplungsabschnitts vom Lichtleiter von Fig.1;
- Fig.4: veranschaulicht Lichtwege und Entkopplungsstrukturen der Lichtleiter von Fig.1;
- Fig.5: zeigt eine Frontansicht von eine Hintergrundbeleuchtung Einheit gemäß einer ersten Ausführungsform, die ein erfindungsgemäßer Lichtleiter;
- Fig.6: zeigt eine Frontansicht von eine Hintergrundbeleuchtung Einheit gemäß einer zweiten Ausführungsform, die ein erfindungsgemäßer Lichtleiter;
- Fig.7: zeigt einen Schnitt durch ein Anzeigegerät einschließend eine Hintergrundbeleuchtungseinheit mit einem erfindungsgemäßen Lichtleiter;
- Fig.8: zeigt eine Seitenansicht des Lichtleiters;
- Fig.9: zeigt einen Totalreflexionskollimator; und
- Fig.10: zeigt eine weitere Ausgestaltung eines Lichtleiters.

### Detaillierte Beschreibung

Die vorliegende Beschreibung veranschaulicht die Grundsätze der vorliegenden Offenbarung. Ein Fachmann ist in der Lage, verschiedene Anordnungen abzuleiten, die, obwohl sie hier nicht ausdrücklich beschrieben oder gezeigt werden, die Prinzipien der Offenbarung verkörpern.

Alle hierin wiedergegebenen Beispiele und bedingten Formulierungen sind zur Erläuterung bestimmt, um dem Leser zu helfen, die Prinzipien der Offenbarung und die Konzepte, die der Erfinder zur Förderung der Technik beigetragen hat, zu verstehen, und sind so auszulegen, dass sie nicht auf die spezifisch zitierten Beispiele und Bedingungen einschränken.

Darüber hinaus sollen alle hierin enthaltenen Aussagen, in denen Prinzipien, Aspekte und Ausführungsformen der Offenbarung sowie spezifische Beispiele dafür aufgeführt werden, sowohl strukturelle als auch funktionale Äquivalente davon umfassen. Darüber hinaus ist beabsichtigt, dass solche Äquivalente sowohl derzeit bekannte Äquivalente als auch in Zukunft entwickelte Äquivalente umfassen, d. h. alle entwickelten Elemente, die unabhängig von ihrer Struktur die gleiche Funktion erfüllen.

So wird es beispielsweise von Fachleuten verstanden werden, dass die hierin dargestellten Diagramme konzeptionelle Ansichten darstellen, die die Prinzipien der Offenbarung verkörpern.

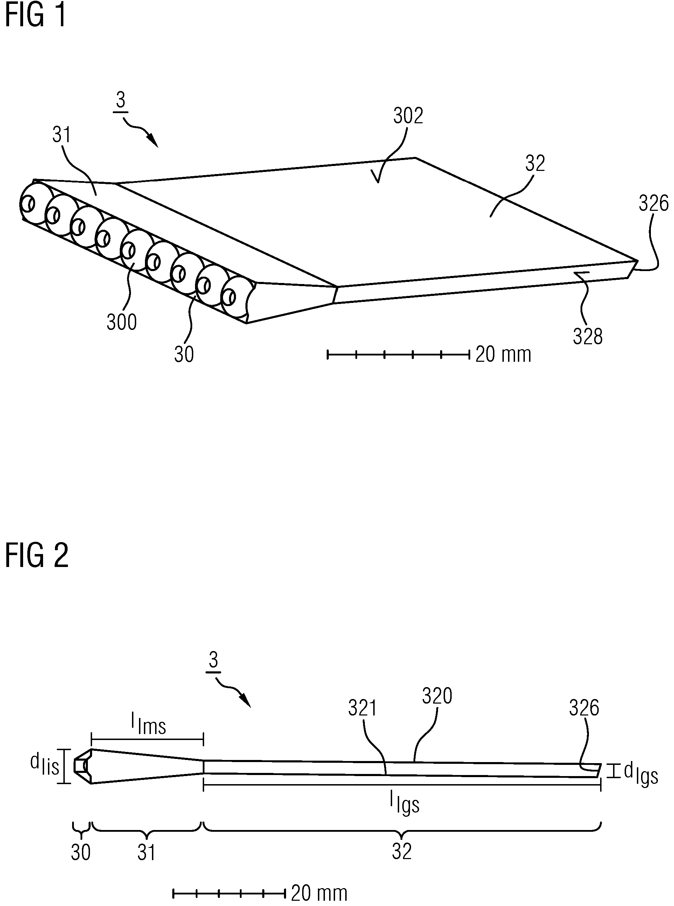

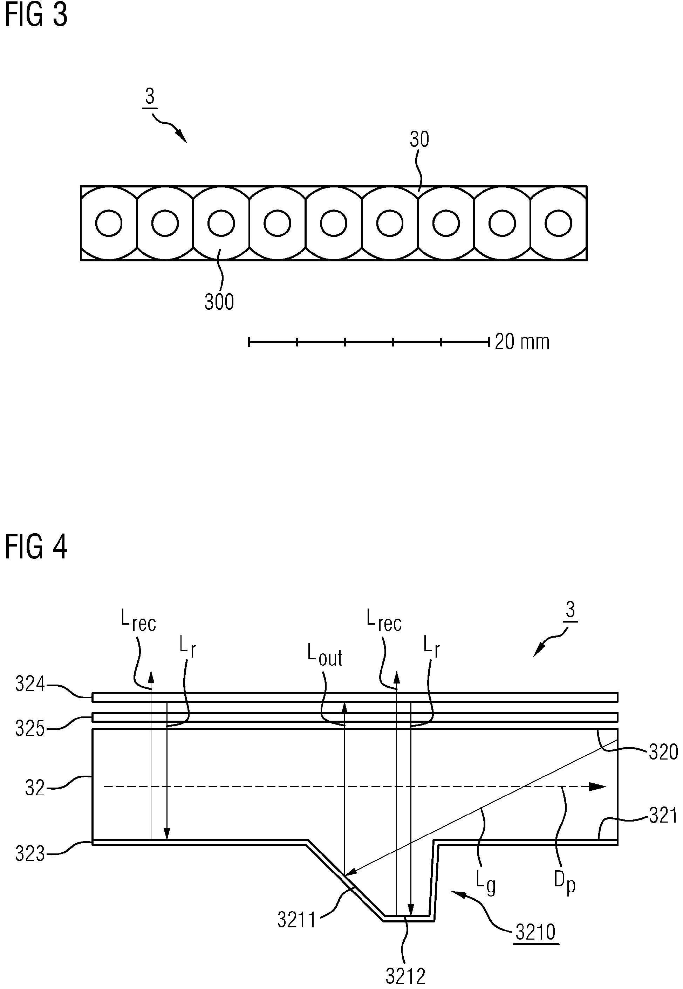

Fig.1 zeigt eine perspektivische Ansicht eines erfindungsgemäßen Lichtleiters 3. Eine Seitenansicht des Lichtleiters 3 ist in Fig. 2 dargestellt. Der Lichtleiter 3 weist auf einen Lichteinkopplungsabschnitt 30, einen konischen Lichtmischabschnitt 31 und einen Lichtleitabschnitt 32. Der Lichteinkopplungsabschnitt 30 weist eine erste Dicke dₗᵢₛ auf und umfasst eine Anordnung von Totalreflexionskollimatoren 300. Eine Vorderansicht des Lichteinkopplungsabschnitts 30 und der Anordnung der Totalreflexionskollimatoren 300 ist in Fig. 3 dargestellt. Der Lichtleitabschnitt 32 hat eine Länge l_{lgs} und eine zweite Dicke d_{lgs}, die kleiner ist als die erste Dicke dₗᵢₛ. Der konische Lichtmischabschnitt 31 hat eine Länge lₗₘₛ und verbindet den Lichteinkopplungsabschnitt 30 und den Lichtleitabschnitt 32. Der Lichtleitabschnitt 32 weist eine obere Fläche, die Oberseite 320, und eine untere Fläche, die Unterseite 321 auf und ist so konfiguriert, dass er Licht, das innerhalb des Lichtleiterabschnitts 32 geführt wird, durch die obere Oberfläche 320 auskoppelt.

Der Lichtleitabschnitt 32 weist eine Seitenfläche 328 auf. Eine Endfläche 326 des Lichtleitabschnitts 32 ist vorteilhaft ausgebildet, um Licht zu reflektieren, welches innerhalb des Lichtleitabschnitts 32 geführt wird, und die Endfläche 326 erreicht. Die Endfläche 326 ist geneigt, sodass das Licht nicht in sich selbst reflektiert wird. Während in Fig.1 und Fig.2 nur ein Lichteinkopplungsabschnitt 30 und ein konischer Lichtmischabschnitt 31 vorhanden sind, können Lichteinkopplungsabschnitte 30 und kegelige Lichtmischabschnitte 31 ebenfalls an der Seitenfläche 328 des Lichtleitabschnitts 32 angeordnet sein.

Fig.4 zeigt Lichtwege und Auskoppelstrukturen 3210 des Lichtleiters 3 von Fig. 1. Das Licht L_{g}, das innerhalb des Lichtleitabschnitts 32 des Lichtleiters 3 geführt wird, verläuft beim ersten Durchlaufen des Lichtleiters 3, in der Abbildung von links nach rechts, im wesentlichen parallel entlang einer Ausbreitungsrichtung Dₚ. Die Auskoppelstrukturen 3210 sind in einer Bodenfläche 321 des Lichtleitabschnitts 32 des Lichtleiters 3 angeordnet. Beim ersten Durchlaufen des Lichtleiters 3 interagiert das im wesentlichen parallele Licht nicht oder kaum mit den Auskoppelstrukturen 3210. Im Ausführungsbeispiel ist eine reflektierende Beschichtung 323 auf der Unterseite 321 angeordnet, um Lichtverluste durch die Unterseite 321 zu reduzieren. Die Auskoppelstrukturen 3210 weisen Bereiche 3211 auf, die relativ zur Unterseite 321 geneigt sind. Die geneigten Bereiche 3211 sind so ausgebildet, dass sie von der geneigten Endfläche 326 reflektiertes Licht L_{g}, welches zur Ausbreitungsrichtung Dₚ geneigt innerhalb des Lichtleitabschnitts 32 geführt wird, zur Oberseite 320 des Lichtleitabschnitts 32 lenken, wo es zumindest teilweise den Lichtleitabschnitt 32 verlässt und somit ausgekoppeltes Licht Lₒᵤₜ bildet.

Die Auskoppelstrukturen 3210 weisen weiterhin Bereiche 3212 auf, die parallel zur Oberseite 320 verlaufen. Der Lichtleiter 3 ist so konzipiert, dass er ein sogenanntes Polarisationsrecycling realisiert. Ein reflektierender Polarisator 324 oberhalb des Lichtleitabschnitts 32 reflektiert Licht Lᵣ mit einem Polarisationszustand, der sonst von einem Anzeigefeld absorbiert würde, welches mittels des Lichtleiters 3 beleuchtet wird. Mit Hilfe einer Verzögerungsschicht 325 wird der Polarisationszustand des reflektierten Lichts Lᵣ bei einer Retroreflexion an der Unterseite 321 in den nutzbaren Polarisationszustand überführt. Das resultierende recycelte Licht L_{rec} ist nun in der Lage, den reflektierenden Polarisator 324 zu passieren. Die Verzögerungsschicht 325 ist beispielsweise als eine Verzögerungsfolie, als ein Verzögerungsfilm, oder als eine Verzögerungsbeschichtung ausgeführt.

Länge und Verjüngung des konischen Lichtmischabschnitts 31 des Lichtleiters 3 sowie der Neigungswinkel der geneigten Endfläche 326 sind so ausgebildet, dass in Verbindung mit den Auskoppelstrukturen 3210 das aus dem Lichtleitabschnitt 32 heraus ausgekoppelte Licht eine enge Winkelverteilung aufweist. Eine Dichte der Auskoppelstrukturen 3210 entlang der Ausbreitungsrichtung Dₚ ist vorteilhaft so ausgebildet, dass das aus dem Lichtleitabschnitt 32 heraus ausgekoppelte Licht Lₒᵤₜ eine im Wesentlichen konstante Helligkeitsverteilung über die gesamte Länge des Lichtleitabschnitts 32 aufweist.

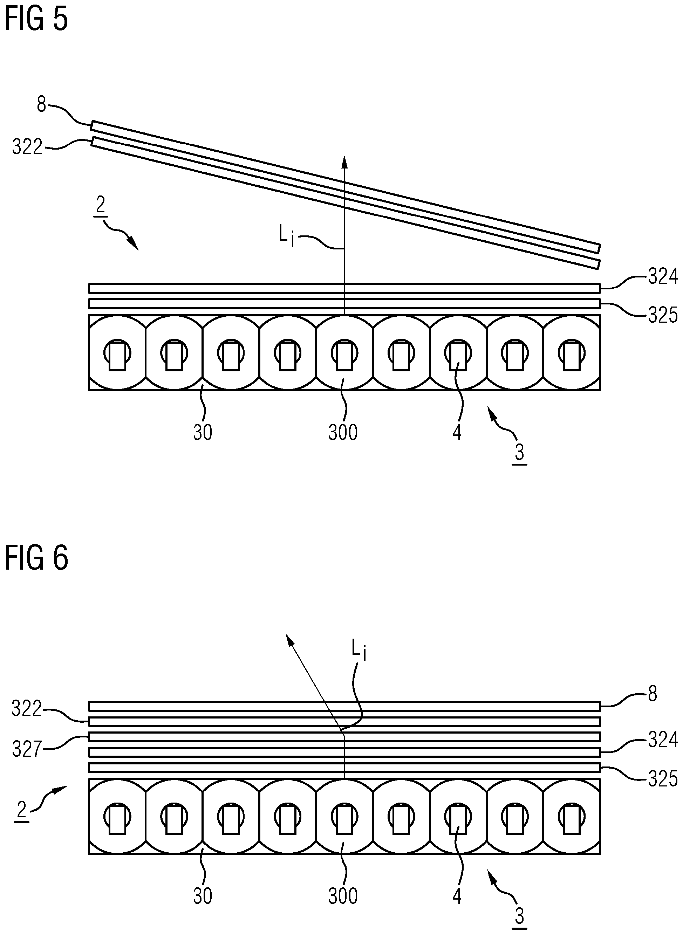

Fig.5 zeigt eine Vorderansicht einer Hintergrundbeleuchtungseinheit 2 gemäß einer ersten Ausführungsform, die einen erfindungsgemäßen Lichtleiter 3 verwendet. Dargestellt ist der Lichteinkopplungsabschnitt 30 mit der Anordnung von Totalreflexionskollimatoren 300. Ebenfalls dargestellt sind die Lichtquellen 4, die sich vor den Totalreflexionskollimatoren 300 befinden. Auf der Oberseite des Lichtleitabschnitts des Lichtleiters 3 sind eine Verzögerungsfolie 325 und ein reflektierender Polarisator 324 für das Polarisationsrecycling angeordnet. Zur besseren Visualisierung sind die Verzögerungsfolie 325 und der reflektierende Polarisator 324 als separate, voneinander entfernte Schichten dargestellt. In der Praxis können sie auf der Oberseite des Lichtleitabschnitts gestapelt werden. Licht, das aus dem Lichtleitabschnitt ausgekoppelt ist und durch den reflektierenden Polarisator 324 fällt, dient als Beleuchtungslicht Lᵢ. Das Beleuchtungslicht Li passiert eine Diffusorfolie 322, die vor einer Anzeigetafel 8 angeordnet ist, um beleuchtet zu werden. Die Diffusorfolie 322 kann beispielsweise verwendet werden, um die Homogenität des Beleuchtungslichts Lᵢ weiter zu verbessern und die Winkelverteilung des Lichts zu modifizieren. Die Diffusorfolie 322 kann zusätzlich eine Fresnel-Linse bilden. In dieser Ausführungsform sind die Anzeigetafel 8 und die Diffusorfolie 322 in einem Winkel relativ zur Oberseite des Lichtleitrabschnitts des Lichtleiters 3 angeordnet. Dies ist besonders nützlich, wenn die Hintergrundbeleuchtungseinheit 2 in einem Head-Up-Display verwendet wird. Um Sonnenreflexionen in die Eyebox eines Head-Up-Displays zu unterdrücken, ist die Anzeigetafel 8 so geneigt, dass einfallendes Licht in Richtung einer Seitenwand des Head-Up-Displays abgelenkt wird. Das Licht einer Bilderzeugungseinheit des Head-Up-Displays muss jedoch entlang der Blickrichtung abgestrahlt werden. Daher verlässt es die Anzeigetafel 8 nicht vertikal, sondern in einem Winkel.

Fig.6 zeigt eine Vorderansicht einer Hintergrundbeleuchtungseinheit 2 gemäß einer zweiten Ausführungsform, die einen erfindungsgemäßen Lichtleiter 3 verwendet. Die Ausführungsform entspricht weitgehend der Ausführungsform von Fig. 5. In dieser Ausführungsform sind jedoch die Anzeigetafel 8 und die Diffusorfolie 322 parallel zur Oberseite des Lichtleitabschnitts des Lichtleiters 3 angeordnet. In diesem Beispiel ist eine zusätzliche Prismenfolie 327 auf dem reflektierenden Polarisator 324 angeordnet, um die Richtung des Beleuchtungslichts Lᵢ zu ändern. Die Prismenfolie 327 ist optional und kann ebenfalls weggelassen werden. In diesem Fall ist die Blickrichtung senkrecht zur Anzeigetafel 8. Wie zuvor sind die verschiedenen optischen Schichten 322, 324, 325, 327 als separate Schichten dargestellt. In der Praxis können sie auf der Oberseite des Lichtleiterabschnitts gestapelt werden.

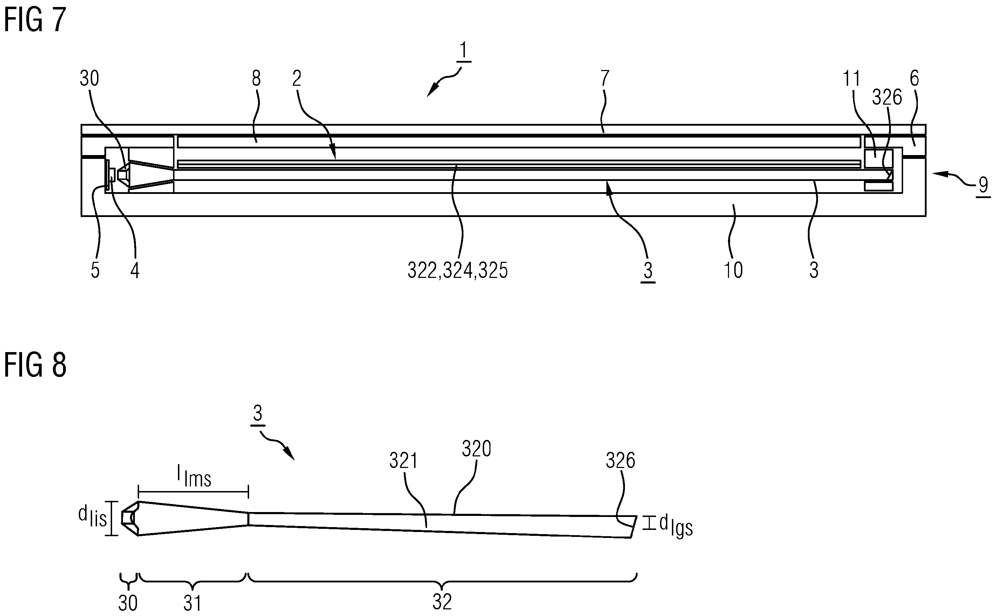

Fig. 7 zeigt einen Schnitt durch eine Anzeigevorrichtung 1, die eine Hintergrundbeleuchtungseinheit 2 mit einem erfindungsgemäßen Lichtleiter 3 aufweist. Die Anzeigevorrichtung 1 umfasst ein Gehäuse 9 mit einer Rückplatte 10. Das Gehäuse 9 ist durch ein Deckglas 7 abgedichtet. In diesem Beispiel wird das Deckglas 7 auf ein Befestigungselement 6 des Gehäuses 9 geklebt. Eine Anzeigetafel 8 wird mit dem Deckglas 7 verklebt und von der Hintergrundbeleuchtungseinheit 2 beleuchtet. Die Hintergrundbeleuchtungseinheit 2 umfasst einen erfindungsgemäßen Lichtleiter 3. Eine Anordnung von Lichtquellen 4 ist an einer Seitenwand der Rückplatte 10 montiert. Die Lichtquellen 4 sind auf einer Leiterplatte 5 neben dem Lichtleiter 3 so montiert, dass sie Licht in Richtung des Lichteinkopplungsabschnitts 30 des Lichtleiters 3 emittieren. Zum Beispiel können die Lichtquellen 4 frontemittierende Dioden sein, d. h. Leuchtdioden, die von ihrer Oberseite emittieren. Ein Kissenband 11 ist zwischen dem Befestigungselement 6 des Gehäuses 9 und dem Lichtleiter 3 angeordnet, um eine Bewegung des Lichtleiters 3 in einer Richtung senkrecht zur Anzeigetafel 8 zu verhindern. Eine Bewegung des Lichtleiters 3 in einer Richtung parallel zur Anzeigetafel 8 kann durch Vorsprünge der Rückplatte 10 verhindert werden, die in Fig. 7 nicht dargestellt sind.

Fig.8 zeigt eine Seitenansicht des Lichtleiters 3, ähnlich wie zu Fig.2 beschrieben. Im Unterschied dazu sind hier die Oberseite 320 und die Unterseite 321 nichtparallel zueinander ausgerichtet. Sie weisen angrenzend zum Lichtmischabschnitt 31 eine geringere Dicke D_{lgsi} auf als die Dicke D_{lgs} im Bereich der Endfläche 326.

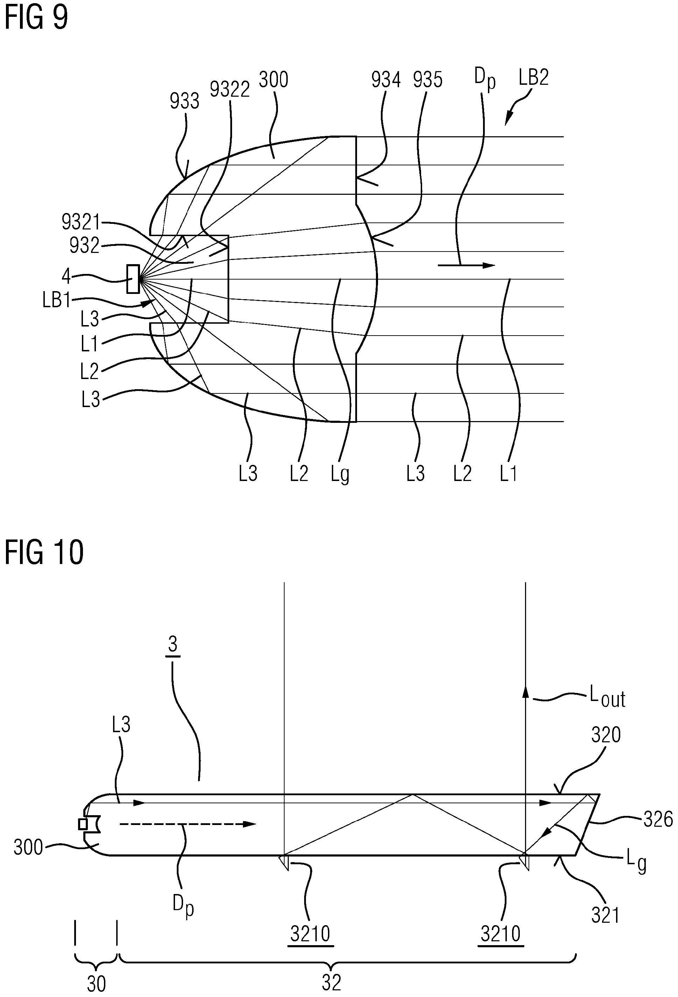

Fig.9 zeigt einen Totalreflexionskollimator 300, oft auch als TIR-Kollimator bezeichnet, in geschnittener Darstellung. Im folgenden wird ein Kollimator als Totalreflexionskollimator bezeichnet, wenn er zumindest zum Teil auf totaler innerer Reflexion (Totalreflexion an einer Innenfläche) beruht. Ein Hybridkollimator, der sowohl verspiegelnd beschichtete Reflexionsflächen aufweist, als auch unbeschichtete Flächen, an denen Lichtstrahlen mittels totaler innerer Reflexion reflektiert werden, wird somit hier auch als Totalreflexionskollimator bezeichnet. Der Totalreflexionskollimator 300 besteht aus Glas, Plexiglas oder einem anderen lichtdurchlässigen Material. Auf seiner linken Seite befindet sich eine Lichtquelle 4. Sie befindet sich in der Nähe einer sacklochartigen Ausnehmung 932, die sich auf der Unterseite des Totalreflexionskollimators 300, dessen Lichteingangsseite, befindet. Sie hat im dargestellten Ausführungsbeispiel einen rechtwinkligen Querschnitt mit einer Seitenfläche 9321 und einer Bodenfläche 9322. Nach radial außen schließt sich an die Ausnehmung 932 eine gekrümmte Oberfläche 933 an. Die der Lichtquelle 4 abgewandte Seite des Totalreflexionskollimators 300, an der das Licht austritt, weist im radial äußeren Bereich eine ringförmige Oberfläche 934 auf, in deren Zentrum sich eine konvexe Oberfläche 935 befindet.

Die Lichtquelle 4 erzeugt ein breitgefächertes Lichtbündel LB1. Ein zentraler Lichtstrahl L1 verläßt die Lichtquelle 4 in der Haupt-Ausbreitungsrichtung Dₚ. Er tritt ungebrochen durch die Bodenfläche 9322 der Ausnehmung 932 in den Totalreflexionskollimator 300 ein, passiert diesen und tritt an der konvexen Oberfläche 935 aus. Da er sich in der zentralen Symmetrieachse des Totalreflexionskollimators 300 befindet, wird er auch hier nicht gebrochen. Ein weiterer Lichtstrahl L2 verläuft in einem Winkel zur zentralen Symmetrieachse des Totalreflexionskollimators 300, und tritt in einem Randbereich der Bodenfläche 9322 in den Totalreflexionskollimator 300 ein. Dabei wird er geringfügig zur zentralen Symmetrieachse hin gebrochen. Er trifft nach Durchlaufen des Totalreflexionskollimators 300 auf die Innenseite der konvexen Oberfläche 935, und zwar in deren äußerem Bereich, und wird dort zur zentralen Symmetrieachse hin gebrochen. Er verläßt den Totalreflexionskollimator 300 nahezu parallel zur Ausbreitungsrichtung Dₚ. Der radial innere Bereich des Totalreflexionskollimators 300 wirkt mit der konvexen Oberfläche 935 ähnlich wie eine Sammellinse. Ein Lichtstrahl L3, der die Lichtquelle 4 in einem stark von der Hauptstrahlrichtung abweichenden Winkel verläßt, tritt durch die Seitenfläche 9321 in den Totalreflexionskollimator 300 ein. Dabei wird er gebrochen und weist anschließend einen noch größeren Winkel zur Hauptstrahlrichtung auf. Er trifft dann an die Innenseite der gekrümmten Oberfläche 933, an der er totalreflektiert wird. Nach der Totalreflexion verläuft er bereits parallel zur Hauptstrahlrichtung und verläßt den Totalreflexionskollimator 300 durch die ringförmige Oberfläche 934. In der Darstellung ist die Fläche der ringförmigen Oberfläche 934 senkrecht zur Hauptstrahlrichtung eben, eine Brechung des Lichtstrahl L3 findet nicht statt, da dieser bereits parallel zur Hauptstrahlrichtung ausgerichtet ist. Die Totalreflexion an der Innenseite der gekrümmten Oberfläche 933 wird im Ausführungsbeispiel dadurch erreicht, daß der entsprechende Grenzwinkel für die Totalreflexion nicht unterschritten wird. Gemäß einer Variante ist die gekrümmte Oberfläche 933 nach innen hin verspiegelt, sodaß die Totalreflexion auf die Verspiegelung zurückzuführen ist. In diesem Fall ist es nicht erforderlich, den Grenzwinkel zu beachten. Eine freiere Gestaltung der Form der gekrümmten Oberfläche 933 und gegebenenfalls weiterer Flächen des Totalreflexionskollimators 300 ist somit ermöglicht. In der Abbildung sind noch weitere Strahlen eingezeichnet, die entweder wie die Lichtstrahlen L1, L2 den Totalreflexionskollimator durch die konvexe Oberfläche 935 verlassen, oder wie der Lichtstrahl L3 durch die ringförmige Oberfläche 934. Die Flächen 933,934,935,9321,9322 sind weiterhin so gewählt, daß eine Umverteilung der in den Totalreflexionskollimator 300 einfallenden Lichtstrahlen sowohl zu einer Parallelisierung bezüglich der Hauptstrahlrichtung führt, als auch dazu, daß die Beleuchtungsstärke, also die Lichtleistung pro Fläche, nach Austritt der Lichtstrahlen aus dem Totalreflexionskollimator im Lichtbündel LB2 konstant oder nahezu konstant über der Fläche ist. Das den Totalreflexionskollimator 300 verlassende Lichtbündel LB2 tritt dann in den - hier nicht dargestellten - Lichtleitabschnitt 32 ein.

Fig.10 zeigt einen Lichtleiter 3 bei dem der Lichteinkopplungsabschnitt 30 hauptsächlich aus Totalreflexionskollimatoren 300 besteht, und direkt in den Lichtleitabschnitt 32 übergeht. Das eingekoppelte Licht verläuft somit nahezu parallel zur Oberseite 320 und zur Unterseite 321 des Lichtleitabschnitts 32 entsprechend der Ausbreitungsrichtung Dₚ. Lichtstrahlen, die dennoch die Oberseite 320 oder die Unterseite 321 treffen, treffen dort mit einem Winkel auf, dessen Betrag oberhalb des Totalreflexionswinkels (auch: Grenzwinkel, üblicherweise zum Lot der Oberfläche definiert) liegt, und werden somit innerhalb des Lichtleitabschnitts 32 geführt, bis sie an der geneigten Endfläche 326 reflektiert werden. Lichtstrahlen, die auch dann noch oberhalb des Totalreflexionswinkels von innen auf die Oberseite 320 oder die Unterseite 321 treffen, werden von diesen reflektiert und werden im Lichtleitabschnitt 32 nun entgegengesetzt zur Richtung Dₚ geführt. Trifft geführtes Licht L_{g} auf eine Auskoppelstruktur 3210, so wird es von dieser in Richtung Oberseite 320 gelenkt und dort als ausgekoppeltes Licht Lₒᵤₜ ausgekoppelt. Da die Auskoppelstrukturen 3210 sich teilweise nicht über die volle Breite des Lichtleitabschnitts 32 erstrecken, ist in der Abbildung auch ein Anteil des Lichts L_{g} gezeigt, der die in der Abbildung rechte Auskoppelstruktur 3210 nicht trifft, sondern von der Unterseite 321 reflektiert wird, und erst von der linken der beiden gezeigten Auskoppelstrukturen 3210 in Richtung Oberseite 320 reflektiert wird.

### Referenzziffern

- 1: Anzeigevorrichtung
- 2: Hintergrundbeleuchtungseinheit
- 3: Lichtleiter
- 30: Lichteinkopplungsabschnitt
- 300: Totalreflexionskollimator
- 31: Lichtmischabschnitt, konisch
- 32: Lichtleitabschnitt
- 320: Oberseite des Lichtleitabschnitts
- 321: Unterseite des Lichtleitabschnitts
- 3210: Auskoppelstruktur
- 3211: Schräger Bereich
- 3212: Paralleler Bereich
- 322: Diffusorfolie
- 323: Reflektierende Beschichtung
- 324: Reflektierender Polarisator
- 325: Verzögerungsschicht
- 326: Endfläche, geneigt
- 327: Prismenfolie
- 328: Seitenfläche
- 4: Lichtquelle
- 5: Leiterplatte
- 6: Befestigungselement
- 7: Deckglas
- 8: Anzeigetafel
- 9: Gehäuse
- 932: Ausnehmung
- 9321: Seitenfläche
- 9322: Bodenfläche
- 933: gekrümmte Oberfläche
- 934: ringförmige Oberfläche
- 935: konvexe Oberfläche
- 10: Rückplatte
- 11: Kissenband
- d_{lgs}, d_{lgsi}: Dicke des Lichtleitabschnitts
- dₗᵢₛ: Dicke des Lichteinkopplungsabschnitts
- Dₚ: Ausbreitungsrichtung
- LB1,LB2: Lichtbündel
- L1,L2,L3,L4: Lichtstrahl
- Lᵢ: Beleuchtungslicht
- L_{g}: Lichtlenkung in Lichtleitabschnitt
- I_{lgs}: Länge Lichtleitabschnitt
- Iₗₘₛ: Länge Lichtmischabschnitt
- Lₒᵤₜ: Lichtauskopplung aus Lichtleitabschnitt
- Lᵣ: Reflektiertes Licht
- L_{rec}: Recyceltes Licht

## Patentansprüche

1. Lichtleiter (3) für eine Hintergrundbeleuchtungseinheit (2), aufweisend:
- mindestens einen Lichteinkopplungsabschnitt (30), wobei dieser mindestens eine Anordnung von Totalreflexionskollimatoren (300) aufweist,
- einen Lichtleitabschnitt (32), wobei der Lichtleitabschnitt (32) eine reflektierende geneigte Endfläche (326) aufweist, und wobei der Lichtleitabschnitt (32) eine Oberseite (320) und eine Unterseite (321) aufweist, wobei der Lichtleitabschnitt (32) so konfiguriert ist, dass er das vom Lichteinkopplungsabschnitt (30) kommende Licht (L3) innerhalb des Lichtleitabschnitts (32) zur geneigten Endfläche (326) führt, und das von der geneigten Endfläche (326) reflektierte Licht (Lg) durch die Oberseite (320) auskoppelt.

2. Lichtleiter (3) nach Anspruch 1, wobei der Lichteinkopplungsabschnitt (30) eine erste Dicke (dₗᵢₛ) aufweist, der Lichtleitabschnitt (32) eine zweite Dicke (d_{lgs}) aufweist, und ein konischer Lichtmischabschnitt (31) vorhanden ist, der den mindestens einen Lichteinkopplungsabschnitt (30) und den Lichtleitabschnitt (32) verbindet.

3. Lichtleiter (3) nach Anspruch 1 oder 2, wobei die Unterseite (321) des Lichtleitabschnitts (32) Auskoppelstrukturen (3210) aufweist, wobei die Auskoppelstrukturen (3210) Bereiche (3211) aufweisen, die relativ zur Unterseite (321) des Lichtleitabschnitts (32) geneigt sind und so ausgebildet sind, dass sie einen Bruchteil des innerhalb des Lichtleitabschnitts (32) geführten von der geneigten Endfläche (326) kommenden Lichts (L_{g}) zur Oberseite (320) des Lichtleitabschnitts (32) lenken.

4. Lichtleiter (3) nach Anspruch 3, wobei eine Länge (Iₗₘₛ) und eine Verjüngung des sich verjüngenden Lichtmischabschnitts (31) und die Neigung der Endfläche (326) derart ausgebildet sind, dass in Verbindung mit den Auskoppelstrukturen (3210) das aus dem Lichtleitabschnitt (32) herausgekoppelte Licht (Lₒᵤₜ) eine enge Winkelverteilung aufweist.

5. Lichtleiter (3) nach Anspruch 3 oder 4, wobei eine Dichte der Auskopplungsstrukturen (3210) entlang einer Ausbreitungsrichtung (Dₚ) des innerhalb des Lichtleiterabschnitts (32) geführten von der geneigten Endfläche (326) reflektierten Lichts (L) so ausgebildet ist, dass das aus dem Lichtleitabschnitt (32) heraus ausgekoppelte Licht (Lₒᵤₜ) eine im Wesentlichen konstante Helligkeitsverteilung über die gesamte Länge (I_{lgs}) des Lichtleitabschnitts (32) aufweist.

6. Lichtleiter (3) nach einem der vorhergehenden Ansprüche, ferner mit einer Diffusorfolie (322), die auf oder über der Oberseite (320) des Lichtleitabschnitts (32) angeordnet ist.

7. Lichtleiter (3) nach einem der vorhergehenden Ansprüche, ferner mit einer reflektierenden Beschichtung (323), die auf der Unterseite (321) des Lichtleitabschnitts (32) angeordnet ist.

8. Lichtleiter (3) nach einem der vorhergehenden Ansprüche, ferner aufweisend einen reflektierenden Polarisator (324), der auf der Oberseite (320) des Lichtleiterabschnitts (32) angeordnet ist.

9. Lichtleiter (3) nach Anspruch 8, ferner aufweisend eine Verzögerungsschicht (325), die zwischen der Oberseite (320) des Lichtleitabschnitts (32) und dem reflektierenden Polarisator (324) angeordnet ist.

10. Lichtleiter (3) nach Anspruch 8, wobei der Lichtleitabschnitt (32) aus einem doppelbrechenden Material besteht.

11. Lichtleiter (3) nach einem der Ansprüche 8 bis 10, wobei die Auskoppelstrukturen (3210) Bereiche (3212) aufweisen, die parallel zur Unterseite (321) des Lichtleitabschnitts (32) verlaufen.

12. Hintergrundbeleuchtungseinheit (2) mit einem Lichtleiter (3) nach einem der Ansprüche 1 bis 11, wobei die Hintergrundbeleuchtungseinheit (2) weiterhin mindestens eine Anordnung von Lichtquellen (4) aufweist, wobei die Lichtquellen (4) so konfiguriert sind, dass sie Licht in Richtung der Totalreflexionskollimatoren (300) emittieren.

13. Anzeigevorrichtung (1) mit der Hintergrundbeleuchtungseinheit (2) nach Anspruch 12, wobei die Anzeigevorrichtung (1) ferner eine Anzeigetafel (8) aufweist, die so konfiguriert ist, dass sie durch Licht (Lₒᵤₜ) beleuchtet wird, das von der Hintergrundbeleuchtungseinheit (2) bereitgestellt wird.

14. Anzeigevorrichtung (1) nach Anspruch 13, wobei die Anzeigevorrichtung (1) so konfiguriert ist, dass sie in einem Head-Up-Display verwendet wird oder eine schaltbare Datenschutzfunktionalität bereitstellt.

15. Anzeigevorrichtung (1) nach Anspruch 13 oder 14, ferner mit einer Prismenfolie (327), die so konfiguriert ist, dass sie eine Richtung des von der Hintergrundbeleuchtung (2) kommenden Beleuchtungslichts (Lᵢ) ändert.
